# EUROPEAN PATENT APPLICATION

(11) **EP 1 457 315 A1**
(43) Date of publication of application: **15.09.2004**
(21) Application number: 03425159.5
(22) Date of filing: 14.03.2003
(51) Int. Cl.: B32B 27/32, C09K 3/18

(54) **A polyolifin film having antifog properties**

(71) Applicant: VIBAC S.p.A., I-15040 Ticineto (Alessandria) (IT)
(72) Inventor: Guida, Filippo, 67100 L'Aquila (IT); Mazzaferro, Stefano, 67100 L'Aquila (IT)
(74) Representative: Gerbino, Angelo

(57) **Abstract**

A multilayer, polyolefin, bi-axially oriented film comprises at least one base layer, a first intermediate layer, a first cover layer and a second cover layer disposed on the opposite side from the first cover layer and the first intermediate layer with respect to the base layer. Antifog additive is contained at least in the base layer and in the first cover layer. In the film the ratio between the thickness of the first cover layer and the thickness of the first intermediate layer is greater than 1 and lies between 1 and 2 and the surface tension of the face of the film belonging to the first cover layer is greater than the surface tension of the other face of the film belonging to the second cover layer.

## Description

The present invention relates to a multilayer, biaxially oriented polyolefin and to an associated method of production.

Films of this type are widely used in the production of packaging for containing foods of various types. Because of their high level of impermeability to water vapour, combined with a low surface tension, when such films are used for sealed packaging (for example in the form of welded envelopes) of foods containing and/or developing a quantity of moisture, this latter, by the effect of the low temperature of conservation of the food itself, transforms into liquid water, depositing in the form of minute droplets on the inner face of the film within the packaging. This thus produces a continuous layer of water which, by the effect of the refraction of light, behaves as an opaque layer which impedes the view into the interior of the packaging and thus eliminate the advantage of the transparency of these films.

In order to avoid this disadvantage it is known to impart such films with antifogging properties - commonly defined with the Anglo-Saxon term "antifog" - by the deposition onto the surface of the film itself of lacquers or claddings with antifogging properties. The disadvantage of these films lies in the greater cost of production caused both by the greater cost of the raw materials, that is to say the lacquer, and by the additional spreading operation required by the production process.

It is also known to incorporate antifog agents into the polymeric matrix during the process of extrusion of the film, with a lower cost procedure than that which utilises the lacquer cladding. There have thus been formed polyolefin films (for example based on polyethylene, polypropylene, PVC, and others) having antifog additives incorporated in the polymeric matrix, but of lower efficacy than corresponding lacquered films.

Known films with antifog properties are not, however, satisfactory as far as the exhibition of such properties is concerned, both in the short term, that is to say within several hours of their production, and in the long term, that is to say at a distance of months from their production.

For the purpose of overcoming this disadvantage the subject of the present invention is constituted by a film having the characteristics set out in Claim 1 which follows.

The film of the present invention has excellent antifog properties both in the long term and in the short term thanks to the particular ratio chosen between the thickness of the first cover layer (which in operation is the innermost, that is to say that facing towards the interior of the packaging) and the thickness of the first intermediate layer which is interposed between the first cover layer and the base layer. In fact, the presence of the antifog additive in the first cover layer which is of greater thickness than the first intermediate layer permits the development of a rapid antifog action, accentuated by the different surface tension of the two faces of the film, which is such as to orientate the direction of migration of the antifog additive towards the inner face of the film. For its part, the lesser thickness of the first intermediate layer allows this latter to act as a flow regulator of the antifog additive, which migrates from the base layer towards the first cover layer, causing a greater persistence over time of the antifog action. At the same time the presence of the antifog agent in the base layer causes, through a slow release, an antifog action extended over time due to the so-called "reservoir effect".

The antifog additives are generally compounds having a nonpolar moiety able to bond to the polyolefin matrix and a polar moiety able to interact with acqueous systems. The type of antifog additive usable within the scope of the present invention is not, however, critical and can be chosen from any of the known additives and their combinations, for example esters of glycerol with fatty acids having long and medium chains of carbon atoms and/or ethoxylated aliphatic amines. Advantageously the antifog additive is added only to the base layer and the first cover layer, with the base layer containing antifog additive in an amount lying between 1 and 10% of its total weight, and the first cover layer containing antifog additive in an amount lying between 5 and 40% of its total weight.

Preferably, the ratio between the thickness of the first cover layer and the thickness of the first intermediate layer lies between 1.2 and 1.7, whilst the surface tension of the face of the film belonging to the first cover layer is greater by at least 4 mN/m, preferably at least 6 mN/m, than the surface tension of the other face of the film belonging to the second cover layer (which in use is the outermost, that is to say that facing the outside of the package).

In advantageous embodiments of the film of the invention the surface tension of the outer face of the film constituting the first cover layer is not less than 44 mN/m and is preferably between 44 and 48 mN/m, whilst the surface tension of the outer face of the film constituting the second cover layer is less than 40 mN/m and preferably between 38-40 mN/m.

The base layer may comprise a polymer of polypropylene or a mixture of polymers of polypropylene having fluidity indices lying between 1 and 5 g/10min at 230°C and a melting point greater than 140°C and preferably between 150 and 170°C.

The first intermediate layer may comprise polypropylene homopolymer or a mixture of polypropylene homopolymers having fluidity indices lying between 1 and 7g/10min at 230°C and a melting point greater than 140°C and preferably lying between 150 and 170°C, or ethylene-polypropylene copolymer or ethylene-polypropylene-butylene terpolymer having a fluidity index lying between 3 and 7g/10min at 230°C and a melting point greater than 120°C and preferably lying between 130-140°C.

The cover layers may each comprise ethylene-polypropylene copolymer or ethylene-polypropylene-butylene terpolymer having a fluidity index lying between 2 and 10g/10min at 230°C and melting point greater than 120°C and preferably lying between 130 and 140°C. The two cover layers may have different compositions from one another.

Advantageously the thickness of the first cover layer lies between 1.5 and 7 µm and preferably between 2 and 4 µm, the thickness of the second cover layer is between 0.4 and 3 µm and preferably between 1 and 1.5 µm, and the thickness of the first intermediate layer lies between 1 and 5 µm and preferably between 2 and 4 µm.

In addition to the above-indicated layers, the film may further comprise at least one second intermediate layer disposed between the base layer and the second cover layer.

This second intermediate layer may comprise polypropylene homopolymer or a mixture of polypropylene homoplymers having fluidity indices lying between 1 and 7 g/10min at 230°C and a melting point greater than 140°C and preferably lying between 150 and 170°C.

If a second intermediate layer is present, the cover layers may each comprise ethylene-polypropylene copolymer or ethylene-polypropylene-butylene copolymer having fluidity indices lying between 3 and 7 g/10min at 230°C and a melting point greater than 120°C and preferably lying between 130 and 140°C. Moreover, the thickness of the first intermediate layer may lie between 1 and 5 µm and preferably between 1.5 and 3 µm and the thickness of the second intermediate layer may lie between 1 and 7 µm and preferably between 2 and 4 µm.

A further object of the present invention is to provide a production process for the above-described film, which comprises the steps of adding antifog additive to each layer which contains it in the form of a masterbatch containing from 1 to 15% by weight of the said additive.

More generally, this method step is included in an extrusion and biorientation process, the general characteristics of which are known. In such a process the film is produced by melting the materials corresponding to the individual layers. These molten masses are then conducted through separate channels to the interior of a multilayer extrusion head, in which the various channels are reunited in a unitary flow which is extruded through a die to the exterior of the extrusion device. Preferably, in the process of the invention, the base layer is produced with a co-rotating twin screw extruder for the purpose of obtaining a homogeneity of the introduced components which is greater than that obtainable with single screw extruders. The same is true for the intermediate layer or layers which are produced by utilising two co-rotating twin screw extruders.

The extruded film is then solidified and oriented first in a longitudinal sense by means of stretching rollers and then in a transverse sense. The thus-oriented film is preferably subjected to a corona treatment for the purpose of imparting the desired differentiated surface tension to its two faces, and is finally wound in a roll.

Further advantages and characteristics of the present invention will become apparent from the following examples of compositions of film, provided by way of non-limitative example, in which all the percentages are to be considered as percentages by weight if not otherwise indicated.

### Example 1

By means of an extrusion and biaxial orientation process a five-layer film was produced having the following structure:
- second cover layer of thickness equal to 1 µm and composition: 98% of ethylene-propylene copolymer and 2% of antiblock masterbatch containing 5% of a non-migrating active principle of polymeric nature from the family of alkylmethacrylates (POLYBATCH ABTV 22 SC by the firm A. Schulman Plastics);
- second intermediate layer of thickness equal to 2µm and composition: 100% of polypropylene homopolymer;
- base layer of thickness equal to 24µm and composition: 95% of polypropylene homopolymer and 5% of masterbatch containing 10% of antifog additive (Anfog 400685 by the firm Ampacet);
- first intermediate layer of thickness equal to 2µm and composition: 100% of polypropylene homopolymer; and
- first cover layer of thickness equal to 3µm and composition: 68% of ethylene-propylene copolymer, 2% of antiblock masterbatch containing 5% of a non-migrating active principle of polymeric nature from the family of alkylmethacrylates (POLYBATHC ABTV 22 SC by the firm A. Schulman Plastics) and 30% of masterbatch containing 10% of antifog additive (Anfog 400685 by the firm Ampacet).

The surface tension of the faces of the film belonging to the first and second cover layer are respectively equal to 46 and 40 mN/m. These surface tensions are advantageously induced by means of corona discharge treatment.

### Example 2 (Comparative)

A film similar to that of Example 1 is produced with the sole difference that the thickness of the first cover layer is equal to 1µm.

### Example 3 (Comparative)

A film similar to that of Example 1 is produced with the sole difference that the surface tension of both faces of the film is the same and equal to 42 mN/m.

The evaluation of the antifog performance of the films of the examples was achieved with the ICI "hot" method.

According to this method, 50ml of water is introduced into a 250ml beaker which is then covered with the film to be tested in such a way that this latter is fixed to the rim of the beaker itself so as to form a cover. The beaker is then put into a bain marie at a temperature of 60°C and at predetermined time intervals the aspect which the surface of the film under examination assumes is observed, attributing to it an evaluation from A-E on the basis of the parameters set out in Table I.

**Table I**

| Description | Performance | Evaluation | Comment |
|---|---|---|---|
| An opaque layer of small droplets | Very poor | A | Visibility zero, transmission of light very low |
| An opaque/ transparent layer of large droplets | Poor | B | Visibility zero, transmission of light very low |
| A complete layer of large transparent droplets | Poor | C | Slight visibility, lens effect |
| Large isolated droplets | Good | D | Discontinuous layer of droplets |
| Transparent film, without traces of water | Very good | E | Complete visibility |

The following Table II sets out the evaluations of the antifog performances of the films of the examples set out above, which were obtained by application of the ICI hot method.

**Table II**

| Evaluation | | |
|---|---|---|
| Time | 15 Days | 3 Months |
| Example 1 | D/E | D |
| Example 2 | C | C |
| Example 3 | C | B |

By comparing the short term evaluations of the films of Examples 1 and 2 it is noted how those of the latter are decidedly inferior.

By comparing the evaluations of the films of Examples 1 and 3 it is noted that those of the latter are decidedly inferior both in the short and the long term since they are penalised by the subdivision of the antifog additive which, because of the equalisation of the surface tension of the two faces of the film, orientates equally towards both.

Naturally, the principle of the invention remaining the same, the details of embodiments and construction can be widely varied with respect to what has been described purely by way of example, without by this departing from its ambit.

## Claims

1. A multilayer polyolefin bi-axially oriented film comprising at least one base layer, a first intermediate layer, a first cover layer and a second cover layer disposed on the opposite side from the first cover layer and the first intermediate layer with respect to the base layer, and with antifog additive which is contained at least in the base layer and the first cover layer, in which film the ratio between the thickness of the first cover layer and the thickness of the first intermediate layer is greater than 1 and lies between 1 and 2 and the surface tension of the face of the film belonging to the said first cover layer is greater than the surface tension of the other face of the film belonging to the said second cover layer.

2. A film according to Claim 1, in which the ratio between the thickness of the first cover layer and the thickness of the first intermediate layer lies between 1.2 and 1.7.

3. A film according to any preceding claim, in which the surface tension of the face of the film belonging to the said first cover layer is greater by at least 4 mN/m, preferably by at least 6 mN/m than the surface tension of the other face of the film belonging to the said second cover layer.

4. A film according to any preceding claim, in which the said antifog additive is added only to the base layer and the first cover layer.

5. A film according to any preceding claim, in which the said base layer contains antifog additive in an amount lying between 1 and 10% of the total weight of the layer.

6. A film according to any preceding claim, in which the said first cover layer contains antifog additive in an amount lying between 5 and 40% of the total weight of the layer.

7. A film according to any preceding claim, in which the surface tension of the outer face of the film belonging to the said first cover layer is not less than 44 mN/m and is preferably between 44 and 48 mN/m.

8. A film according to any preceding claim, in which the surface tension of the outer face of the film belonging to the said second cover layer is less than 40 mN/m and is preferably between 38-40 mN/m.

9. A film according to any preceding claim, in which the base layer comprises a polypropylene polymer or mixture of polypropylene polymers having fluidity indices lying between 1 and 5 g/10min at 230°C and melting point greater than 140°C and preferably lying between 150 and 170°C.

10. A film according to any preceding claim, in which the said first intermediate layer comprises polypropylene homopolymer or a mixture of polypropylene homopolymers having fluidity indices lying between 1 and 7 g/10min at 230°C and melting point greater than 140°C and preferably lying between 150 and 170°C, or ethylene-polypropylene copolymer or ethylene-polypropylene-butylene terpolymer having a fluidity index lying between 3 and 7 g/10min at 230°C and melting point greater than 120°C and preferably lying between 130-140°C.

11. A film according to any preceding claim, in which the thickness of the said first cover layer lies between 1.5 and 7 µm and preferably between 2 and 4 µm.

12. A film according to any preceding claim, in which the thickness of the said second cover layer lies between 0.4 and 3 µm and preferably between 1 and 1.5 µm.

13. A film according to any preceding claim, in which the said cover layers each comprise ethylene-polypropylene copolypropymer or ethylene-polypropylene-butylene terpolymer having a fluidity index lying between 2 and 10 g/10min at 230°C and a melting point greater than 120°C and preferably lying between 130 and 140°C.

14. A film according to any preceding claim, in which the thickness of the said first intermediate layer lies between 1 and 5 µm and preferably between 2 and 4 µm.

15. A film according to any preceding claim from 1 to 12, further including a second intermediate layer disposed between the base layer and the second cover layer.

16. A film according to Claim 15, in which the said second intermediate layer comprises polypropylene homopolymer or a mixture of polypropylene homopolymers having a fluidity index lying between 1 and 7 g/10min at 230°C and melting point greater than 140°C and preferably lying between 150 and 170°C.

17. A film according to any of the preceding Claims 15 and 16, in which the said cover layers each comprise ethylene-polypropylene copolymer or ethylene-polypropylene-butylene terpolymer having a fluidity index lying between 3 and 7 g/10min at 230°C and melting point greater than 120°C and preferably lying between 130 and 140°C.

18. A film according to any preceding claim from 15 to 17 in which the thickness of the said first intermediate layer lies between 1 and 5 µm and preferably between 1.5 and 3 µm.

19. A film according to any of the previous claims from 15 to 18, in which the thickness of the said second intermediate layer lies between 1 and 7 µm and preferably between 2 and 4 µm.

20. A process for the production of a film according to any preceding claim, comprising the step of adding antifog additive to each layer which contains it in the form of a masterbatch containing from 1 to 15% by weight of said additive.

21. A process according to Claim 20, in which at least the base layer and intermediate layers are each produced by extrusion with a respective co-rotating twin screw extruder.

22. A process according to Claim 21 or Claim 22 in which at least one of the outer faces of the film is subject to corona discharge treatment.
